# FASCICULE DE BREVET EUROPEEN

(11) **EP 2 188 110 B1**
(45) Date de publication et mention de la délivrance du brevet: **30.03.2011**
(21) Numéro de dépôt: 08776579.8
(22) Date de dépôt: 26.07.2008
(51) Int. Cl.: B29C 53/38, B29C 65/02

(54) **PROCÉDÉ DE FABRICATION DE TUBES PAR SOUDAGE**
VERFAHREN ZUR HERSTELLUNG VON ROHREN DURCH SCHWEISSEN
METHOD FOR MANUFACTURING TUBES BY WELDING

(30) Priorité: 13.09.2007 EP 07116384
(43) Date de publication de la demande: 26.05.2010
(73) Titulaire: Aisapack Holding SA, 1896 Vouvry (CH)
(72) Inventeur: THOMASSET, Jacques, CH-1896 Vouvry (CH)
(74) Mandataire: Grosfillier, Philippe
(86) Numéro de dépôt international: PCT/IB2008/053013
(87) Numéro de publication internationale: WO 2009/034485

(56) Documents cités:
- WO-A-2004/039561
- WO-A-2006/029835
- CH-A5- 695 937
- DE-U1- 8 103 868

## Description

### Domaine de l'invention

L'invention concerne la fabrication d'emballages flexibles par soudage de films plastiques. Plus spécifiquement, l'invention se rapporte à la confection de tubes souples destinés à stocker et distribuer des produits liquides ou pâteux.

### Etat de la technique

On connaît des tubes flexibles constitués d'une tête et d'une jupe souple obtenue par soudage d'une bande dite « laminé », le laminé étant formé de plusieurs couches plastiques ou métalliques. Les jupes sont obtenues par déroulement d'une bande ; par mise en forme de la bande en corps tubulaire ; par soudage des extrémités de la bande formant généralement un léger recouvrement ; et enfin par découpe du corps tubulaire en segments de longueur identique. Une tête de tube est ensuite soudée ou moulée sur l'extrémité de ladite jupe. La tête de tube comporte un goulot avec orifice et une épaule reliant le goulot à ladite jupe. Le tube est ainsi livré au conditionneur, tête en bas et avec l'orifice de distribution obturé (par un bouchon vissé par exemple), afin d'être rempli par l'extrémité restée ouverte du tube. Une fois le tube rempli, l'extrémité est fermée par pincement et soudage du film sur lui-même.

Une difficulté rencontrée lors de la confection des tubes flexible par soudage réside dans la déformation de la jupe lors de l'opération de soudage. Souvent, les jupes produites ne présentent pas une géométrie parfaitement circulaire comme il le serait souhaité, mais présente une section en forme de « poire » ou de « goutte d'eau ». Ces défauts de circularité sont particulièrement préjudiciables aux opérations d'assemblage et de remplissage des tubes. L'assemblage de la jupe et de la tête par soudage nécessite l'introduction de la tête à l'intérieur de la jupe ; opération d'autant plus délicate que le défaut de circularité est important. Lors du remplissage, le conditionneur doit introduire une buse par l'extrémité restée ouverte du tube. Cette opération est fortement perturbée lorsque la section du tube n'est pas circulaire.

La circularité des jupes a une influence sur la géométrie finale du tube et dans de nombreux cas les défauts de circularité nuisent aux propriétés esthétiques de l'emballage. Pour cette raison, il est souhaité d'avoir des jupes parfaitement circulaires.

La demande de brevet WO2004039561 propose de déformer le laminé au-delà du domaine élastique préalablement à l'opération de soudage. Un premier procédé proposé dans la demande WO2004039561 consiste à amincir d'environ 1% la bande par calandrage. Un effort compris entre 2,5 et 500 Newton par millimètre de largeur de la bande doit être appliqué. Lorsque la bande comporte plus de 70% de plastique en volume, il est suggéré de chauffer ladite bande avant calandrage à une température comprise entre 75 et 120 °C. Un deuxième procédé proposé dans la demande WO2004039561 consiste à réaliser un embossage se traduisant par la création de reliefs et de creux dont l'amplitude est comprise de préférence entre 1/15 et 3 fois l'épaisseur de la bande. Cette opération de calandrage ou embossage aurait pour effet de modifier les contraintes résiduelles dans le laminé. Selon les inventeurs ce procédé uniformise le comportement élastique de la bande et dans le cas d'un embossage permet d'augmenter la rigidité de la bande dans le sens long et dans le sens travers. Cependant, le procédé proposé dans la demande de brevet WO2004039561 présente plusieurs inconvénients. Elle est difficilement utilisable avec des bandes imprimées et surtout lorsque l'impression est en surface. En effet l'opération de calandrage ou d'embossage tend à détériorer l'impression du fait des déformations des températures et frottements engendrés par le procédé.

Un autre procédé pour améliorer la circularité des tubes est proposé dans la demande de brevet Suisse CH695937A5. Ce procédé consiste à effectuer un traitement thermique sur le corps tubulaire avant qu'il soit coupé en segments de longueur identique. Le corps tubulaire est confectionné selon l'état de l'art, le procédé de soudage comprenant notamment une étape de conformation dans laquelle la bande est enroulée autour d'une tige de soudage pour former un corps cylindrique ; une étape de chauffage pour faire fondre les extrémités de la bande à souder ; une étape de mise en pression des extrémités à souder ; et une étape de refroidissement de la zone soudée. La demande CH695937A5 propose ensuite de faire un traitement thermique du corps tubulaire avant de le couper en segments de longueur identique. Le traitement thermique consiste à homogénéiser la température du corps tubulaire par l'intermédiaire d'un fluide en contact avec la surface extérieure du tube. Le dispositif servant à effectuer le traitement thermique est inséré entre le dispositif de soudage et le dispositif de coupe. Un inconvénient du procédé proposé dans la demande CH695937A5 est lié au temps nécessaire pour effectuer un traitement thermique efficace. Ce temps est d'autant plus long que l'épaisseur du laminé est importante ; si bien que le procédé proposé s'avère inadapté pour les laminés épais et les grandes vitesses de production.

DE-A-8103868 montre un autre état de la technique proche.

### Exposé général de l'invention

L'invention consiste en un procédé de soudage permettant de réaliser par soudage d'un laminé des corps tubulaires de rondeur améliorée. Ce procédé de soudage se caractérise par le fait que la zone soudée subit une déformation de manière à augmenter sa surface.

Le procédé de soudage selon l'invention comprend les étapes suivantes :
- conformation d'un laminé autour d'une tige de soudage,
- chauffage des extrémités à souder du laminé,
- mise en pression desdites extrémités,
- déformation de la zone soudée de manière à augmenter sa surface,
- refroidissement de la zone soudée.

Dans l'exposé de l'invention, l'expression « zone soudée » représente la partie du laminé qui est chauffée, comprimée et refroidie dans le procédé de soudage. La zone soudée ne se limite pas à la partie du laminé formant le recouvrement soudé ; elle constitue la partie du laminé affectée thermiquement par l'opération de soudage.

Par "laminé", on entend une feuille, formée de plusieurs couches plastiques ou métalliques, qui est obtenue par laminage.

Par déformation, on entend une modification de la forme de la zone soudée entraînant un agrandissement de la surface de la zone soudée.

Avantageusement, entre l'étape de mise en pression des extrémités et l'étape de déformation de la zone soudée, les extrémités sont refroidies, sans toutefois atteindre la température ambiante.

Selon un mode de réalisation préférentiel la zone soudée est allongée dans la direction longitudinale, c'est-à-dire selon une direction parallèle à l'axe du tube.

Selon un deuxième mode de réalisation la zone soudée est allongée transversalement, c'est-à-dire selon une direction perpendiculaire à l'axe du tube.

Un troisième mode de réalisation consiste à combiner l'allongement longitudinal et l'allongement transversal de la zone soudée.

La déformation de la zone soudée compense les retraits de ladite zone et relaxe les contraintes liées audits retraits. Les tubes obtenus sont d'une grande rondeur.

L'opération d'allongement de la zone soudée intervient après chauffage des extrémités à souder et avant refroidissement à température ambiante du tube. De préférence, l'opération de déformation a lieu avant la coupe du corps tubulaire en segments de longueur identique.

Avantageusement, l'opération de déformation consiste à augmenter la surface de la zone soudée d'une valeur correspondant à la rétraction de ladite zone sous l'effet du chauffage et du refroidissement. Cette valeur dépend des propriétés du laminé et en particulier des films constituant ledit laminé. Pour un laminé se rétractant fortement dans la direction longitudinale, la déformation de la zone soudée peut atteindre 1 à 2 %.

Préférentiellement, le procédé de soudage consiste à tempérer l'ensemble du corps tubulaire. Avantageusement, le corps tubulaire est tempéré à une température comprise entre 50 et 95 °C au moment de la déformation de la zone soudée.

Une variante de l'invention consiste en un post traitement du tube soudé, ledit post traitement comprenant au moins une opération d'allongement de la zone soudée.

L'invention sera mieux comprise à l'aide des figures suivantes :
La figure 1 illustre un corps tubulaire obtenu par soudage d'un laminé thermoplastique et dont la section présente des défauts de circularité.
La figure 2 illustre un dispositif d'allongement de la zone soudée dans le sens longitudinal.
La figure 3 illustre un dispositif d'allongement de la zone soudée dans le sens transversal.
La figure 4 illustre la section du tube obtenue en appliquant le procédé décrit dans l'invention.

### Exposé détaillé de l'invention

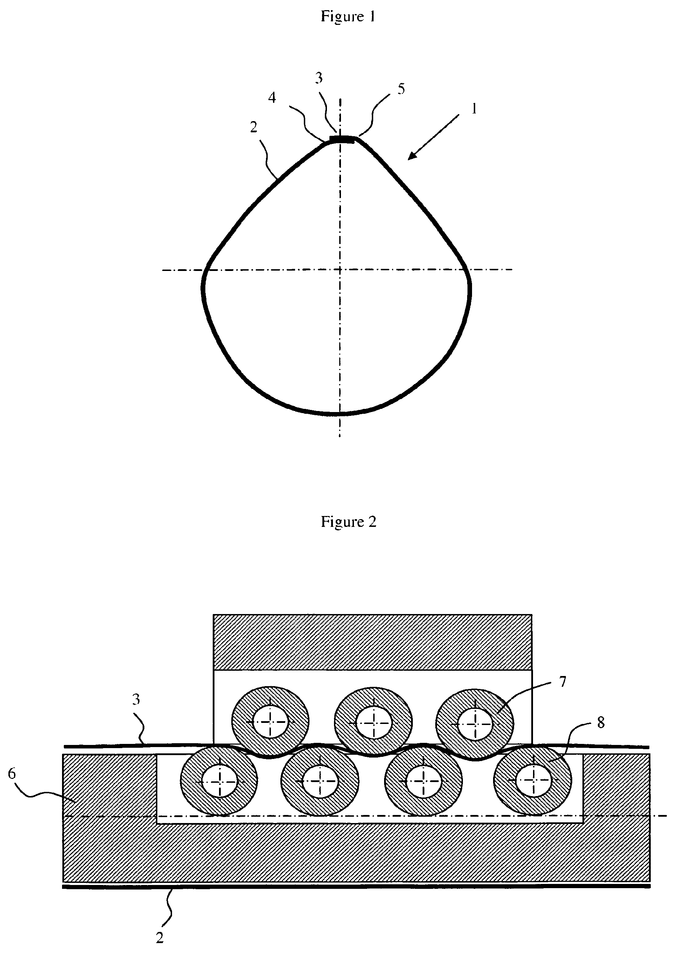

La figure 1 illustre la section d'un corps tubulaire présentant des défauts de circularité auxquels l'invention permet de remédier. Les défauts de la section résultent de la confection du corps tubulaire par soudage selon les procédés connus dans l'état de l'art et sans opérations préalables ou successive au procédé de soudage telles que décrites dans les brevets WO2004039561 et CH695937A5. Le corps tubulaire 1 résulte du soudage d'un laminé 2 dont les extrémités soudées forment un recouvrement au niveau de la zone soudée 3. Il est observé des défauts de circularité 4 et 5 situés à proximité de la zone soudée 3 et affectant globalement la rondeur du corps tubulaire. L'invention permet d'améliorer également la rondeur de corps tubulaire formé par soudage bout à bout des extrémités d'un laminé.

Il est observé que les défauts de circularité 4 et 5 apparaissent au cours du procédé de soudage et en particulier lors du refroidissement de la zone soudée. Il est observé également que les défauts de soudage apparaissent au cours du refroidissement et sont liés à la rétraction thermique de la zone soudée ; ladite rétraction ayant pour effet de générer des contraintes et déformer la section circulaire.

L'invention consiste en un procédé de soudage qui permet de compenser le retrait de la zone soudée et éviter ainsi la génération de contraintes qui déforment le corps tubulaire. Pour ce faire, le procédé de soudage comporte en plus des opérations courantes de chauffage, compression et refroidissement ; une opération d'allongement de la zone soudée. L'allongement de la zone soudée est avantageusement réalisé lors du refroidissement ; lorsque la zone soudée est suffisamment résistante pour être allongée et avant que la zone soudée soit totalement refroidie. L'opération d'étirage consiste à allonger la zone soudée d'une valeur correspondant à la rétraction de ladite zone sous l'effet du chauffage et du refroidissement. Cette valeur dépend des propriétés du laminé et en particulier des films constituant ledit laminé. Pour un laminé se rétractant fortement dans la direction longitudinale, l'allongement de la zone soudée peut atteindre 1 à 2 %.

Conjointement à l'opération d'allongement de la zone soudée, il est avantageux de réduire l'écart de température entre la zone soudée et le reste du corps tubulaire. Il a été trouvé que la réduction de l'écart de température permet de retarder l'apparition de contraintes liées à la rétraction de la zone soudée et permet ainsi de retarder l'opération d'allongement de la zone soudée. Il est favorable d'allonger la zone soudée lorsque la température de ladite zone est proche de la température du reste du corps tubulaire. Pour la confection de corps tubulaires en PE, cette température est comprise entre 50 et 95 °C et préférentiellement entre 60 et 80 °C.

L'opération d'allongement de la zone soudée intervient après chauffage des extrémités à souder et avant refroidissement à température ambiante du tube. Avantageusement, l'opération d'étirage est faite avant la coupe du corps tubulaire en segments de longueur identique. Dans un procédé de soudage en continu, l'invention consiste à partir d'un laminé enroulé sous forme de bobine ; à dérouler le laminé ; à conformer le laminé autour d'une tige de soudage ; à chauffer les extrémités du laminé destinées à être soudées ; à comprimer les extrémités à souder l'une contre l'autre, à refroidir au moins partiellement la zone soudée ; à allonger la zone soudée ; à débiter le corps tubulaire en jupes cylindriques destinées à être assemblées sur des têtes de tube. Le laminé est tempéré pendant l'opération de soudage afin de diminuer le gradient thermique entre la zone soudée et le laminé formant la partie non soudée du corps tubulaire. Le chauffage du laminé peut être fait aisément par l'intermédiaire de la tige de soudage autour de laquelle est conformé le laminé. Une autre méthode pour tempérer le laminé consiste à utiliser de l'air chaud qui est projeté sur la surface externe ou interne du laminé. Pour les laminés comportant une couche d'aluminium, le laminé peut être chauffé par induction de courants dans la couche d'aluminium.

Le premier mode de réalisation de l'invention consiste en un procédé de soudage comportant une opération d'allongement de la zone soudée dans le sens longitudinal ; c'est-à-dire selon une direction perpendiculaire à la section dudit corps tubulaire. Un premier exemple pour allonger la zone soudée dans un procédé ou le laminé se déplace à vitesse constante sur une tige de soudage, consiste à faire varier la vitesse de la zone de soudure. Cette variation de vitesse est obtenue par exemple grâce à un dispositif composé de rouleaux d'entraînement situés sur la zone de soudure et dont le différentiel de vitesse de rotation a pour effet d'allonger la zone soudée. Un deuxième exemple de procédé et dispositif d'allongement de la zone soudée dans le sens longitudinal est illustré figure 2. Ce dispositif inséré dans une tige de soudage est illustré selon une vue en coupe de la tige de soudage 6 ; ladite vue en coupe étant réalisée parallèlement à l'axe de la tige. Ce dispositif est formé d'un ensemble de rouleaux extérieurs à la tige 7, et de rouleaux logés dans la tige 8, agissant conjointement afin d'allonger la zone soudée 3. Seule la zone soudée 3 est allongée, le laminé 2 formant le corps tubulaire n'est pas déformé. L'allongement de la zone soudée 3 est ajusté avec la pression exercée par les rouleaux 7 ; ladite pression ayant pour effet de modifier le parcours de la zone soudée 3. Le nombre et diamètre des rouleaux 7 et 8 est ajusté en fonction du laminé et de la vitesse de soudage. La largeur des rouleaux 7 et 8 est ajustée en fonction la largeur de la zone soudée.

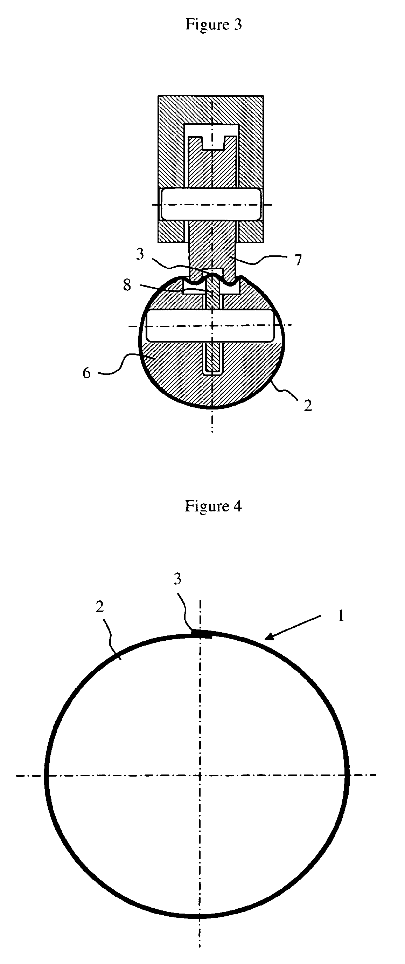

Un deuxième mode de réalisation de l'invention consiste en un procédé de soudage comportant une opération d'allongement de la zone soudée dans le sens transversal ; c'est-à-dire dans une direction perpendiculaire à l'axe du tube. Un exemple de dispositif d'allongement de la zone soudée dans le sens transversal est illustré figure 3. Ce dispositif inséré dans une tige de soudage est illustré selon une vue en coupe de la tige de soudage 6 ; ladite coupe étant réalisée perpendiculairement à l'axe de la tige. Ce dispositif est formé d'un ensemble de rouleaux extérieurs à la tige 7, et de rouleaux logés dans la tige 8, agissant conjointement afin d'allonger la zone soudée 3. Seule la zone soudée 3 est allongée, le laminé 2 formant le corps tubulaire n'est pas déformé. L'allongement de la zone soudée 3 est ajusté avec la pression exercée par les rouleaux 7 ; ladite pression ayant pour effet d'allonger transversalement la zone soudée 3. Le nombre et diamètre des rouleaux 7 et 8 est ajusté en fonction du laminé et de la vitesse de soudage. La largeur des rouleaux 7 et 8 est ajustée en fonction de la largeur de la zone soudée.

Un troisième mode de réalisation de l'invention consiste à allonger longitudinalement et transversalement la zone soudée 3. Le troisième mode peut être mis en oeuvre par l'utilisation séquentielle des dispositifs illustrés figures 3 et 4. Un dispositif permettant un allongement longitudinal et transversal simultané peut être utilisé également.

Le premier, deuxième et troisième mode de l'invention permettent de compenser les retraits de la zone soudée lors du refroidissement et évitent les contraintes de rétraction qui déforment le corps tubulaire. Après allongement, le corps tubulaire dont la température est préférentiellement homogène sur toute sa circonférence, se refroidit à température ambiante de façon homogène. Il en résulte un corps tubulaire sans défaut de circularité. La section de ce corps tubulaire est illustrée figure 5. Les défauts de circularité situés à proximité de la zone de soudage 3 ont été supprimés.

Dans un procédé de fabrication où le laminé n'est pas en mouvement pendant l'opération de soudage, de nombreux dispositifs mettant en traction la zone soudée peuvent être utilisés pour créer la déformation. Ces dispositifs consistent à bloquer une extrémité de la zone soudée et à tirer sur l'autre extrémité. La plupart des principes et mécanismes de traction peuvent être adaptés pour effectuer cette opération.

Dans le cadre de l'invention, il est généralement préférable de ne déformer que la zone soudée, notamment lorsque le laminé est imprimé ; l'opération de déformation du laminé dans son ensemble pouvant avoir pour effet de détériorer l'impression. Cependant dans certains cas, on peut être amené à allonger le tube dans son ensemble.

Une variante de l'invention consiste en un post traitement du tube soudé, ledit post traitement comprenant au moins une opération d'allongement de la zone soudée. L'opération de post traitement consiste à chauffer le corps tubulaire de façon homogène à une température comprise entre 60 et 95 °C ; à allonger la zone soudée ; à mettre en forme le corps tubulaire ; à refroidir le corps tubulaire. L'allongement de la zone soudée peut être longitudinal et/ou transversal. La mise en forme consiste à imposer une section circulaire au corps tubulaire ; ladite mise en forme pouvant être réalisée par pression interne, par dépression externe ou par formage sur un mandrin.

Le corps tubulaire obtenu selon le procédé décrit dans l'invention présente une circularité améliorée et est représenté figure 4. Ce corps tubulaire 1 est formé à partir d'un laminé 2 dont les extrémités sont soudées. L'invention s'applique au soudage par recouvrement, ou au soudage bout à bout des extrémités.

## Revendications

1. Procédé de soudage d'un laminé pour la confection de corps tubulaires flexibles en matière plastique, procédé comprenant les opérations suivantes :
- conformation d'un laminé autour d'une tige de soudage,
- chauffage des extrémités à souder du laminé,
- mise en pression et refroidissement au moins partiel desdites extrémités,
- déformation de la zone soudée de manière à augmenter sa surface,
- refroidissement de la zone soudée.

2. Procédé selon la revendication 1 durant lequel, entre l'étape de mise en pression des extrémités et l'étape de déformation de la zone soudée, les extrémités sont refroidies, sans toutefois atteindre la température ambiante.

3. Procédé selon la revendication 1 ou 2 durant lequel la zone soudée est allongée selon une direction parallèle à l'axe du tube.

4. Procédé selon l'une des revendications 1, 2 ou 3la durant lequel la zone soudée est allongée selon une direction perpendiculaire à l'axe du tube.

5. Procédé selon la revendication 4 dans lequel la zone soudée est allongée selon une direction parallèle à l'axe du tube et selon une direction perpendiculaire à l'axe du tube.

6. Procédé selon l'une quelconque des revendications précédentes comprenant une étape, postérieure à l'étape de refroidissement de la zone soudée, qui consiste à couper le corps tubulaire ainsi formé en plusieurs segments identiques.

7. Procédé selon l'une quelconque des revendications précédentes durant lequel la déformation de la zone soudée correspond sensiblement à la rétraction de ladite zone sous l'effet du chauffage et du refroidissement.

8. Procédé selon l'une quelconque des revendications précédentes durant lequel on tempère le laminé.

9. Procédé selon la revendication 8 durant lequel le laminé est tempéré pendant l'étape de déformation de la zone soudée, à une température comprise entre 50 et 95 °C.

10. Dispositif pour la confection de corps tubulaires flexibles en matière plastique comprenant une tige de soudage, des moyens de chauffage adaptés de manière à chauffer les extrémités d'un laminé disposé autour de ladite tige de soudage et des moyens de mise en pression desdites extrémités, **caractérisé par le fait qu'**il comprend des moyens de déformation pour augmenter la surface de la zone de soudage dudit laminé.

11. Dispositif selon la revendication 10 dans lequel les moyens de déformation sont adaptés pour déformer ladite zone de soudage selon une direction parallèle à l'axe de la tige de soudage.

12. Dispositif selon la revendication 10 dans lequel les moyens de déformation sont adaptés pour déformer ladite zone de soudage selon une direction perpendiculaire à l'axe de la tige de soudage.

## Claims

1. Method of welding a laminate for the production of flexible tubular plastic bodies, which method comprises the following operations:
- a laminate is shaped around a welding rod;
- the ends of the laminate to be welded are heated;
- said ends are pressed together and at least partly cooled;
- the welded zone is deformed so as to increase its area; and
- the welded zone is cooled.

2. Method according to Claim 1, during which, between the step of pressing the ends together and the step of deforming the welded zone, the ends are cooled, without however reaching the ambient temperature.

3. Method according to Claim 1 or 2, during which the welded zone is elongated in a direction parallel to the axis of the tube.

4. Method according to one of Claim 1, 2 and 3, during which the welded zone is elongated in a direction perpendicular to the axis of the tube.

5. Method according to Claim 4, in which the welded zone is elongated in a direction parallel to the axis of the tube and in a direction perpendicular to the axis of the tube.

6. Method according to any one of the preceding claims, which includes a step, after the step of cooling the welded zone, which consists in cutting the tubular body thus formed into several identical segments.

7. Method according to any one of the preceding claims, during which the deformation of the welded zone corresponds approximately to the shrinkage of said zone under the effect of the heating and cooling.

8. Method according to any one of the preceding claims, during which the laminate is tempered.

9. Method according to Claim 8, during which the laminate is tempered, during the step of deforming the welded zone, at a temperature between 50 and 95°C.

10. Device for the production of flexible tubular plastic bodies, which comprises a welding rod, heating means suitable for heating the ends of a laminate placed around said welding rod and means for pressing said ends together, **characterized in that** it includes deformation means for increasing the area of the welding zone of said laminate.

11. Device according to Claim 10, in which the deformation means are designed to deform said welding zone in a direction parallel to the axis of the welding rod.

12. Device according to Claim 10, in which the deformation means are designed to deform said welding zone in a direction perpendicular to the axis of the welding rod.

## Patentansprüche

1. Verfahren zum Verschweißen eines Walzerzeugnisses für die Herstellung biegsamer rohrförmiger Körper aus Kunststoff, wobei das Verfahren die folgenden Operationen enthält:
- Anpassen eines Walzerzeugnisses um einen Schweißstab,
- Erwärmen der zu verschweißenden Enden des Walzerzeugnisses,
- Beauschlagen wenigstens eines Teils der Enden mit Druck und Kälte,
- Verformen der verschweißten Zone, um ihre Oberfläche zu vergrößern,
- Abkühlen der verschweißten Zone.

2. Verfahren nach Anspruch 1, wobei zwischen dem Schritt des Beaufschlagens der Enden mit Druck und dem Schritt des Verformens der verschweißten Zone die Enden gekühlt werden, ohne jedoch die Umgebungstemperatur zu erreichen.

3. Verfahren nach Anspruch 1 oder 2, wobei die verschweißte Zone in einer Richtung parallel zur Achse des Rohrs ausgedehnt wird.

4. Verfahren nach einem der Ansprüche 1, 2 oder 3, wobei die verschweißte Zone in einer Richtung senkrecht zur Achse des Rohrs ausgedehnt wird.

5. Verfahren nach Anspruch 4, wobei die verschweißte Zone in einer Richtung parallel zur Achse des Rohrs und in einer Richtung senkrecht zur Achse des Rohrs ausgedehnt wird.

6. Verfahren nach einem der vorhergehenden Ansprüche, das nach dem Schritt des Abkühlens der verschweißten Zone einen Schritt enthält, der darin besteht, den rohrförmigen Körper, der auf diese Weise gebildet worden ist, in mehrere gleiche Segmente zu zerschneiden.

7. Verfahren nach einem der vorhergehenden Ansprüche, wobei die Verformung der verschweißten Zone im Wesentlichen der Retraktion der Zone unter der Wirkung des Erwärmens und des Abkühlens entspricht.

8. Verfahren nach einem der vorhergehenden Ansprüche, wobei das Walzerzeugnis getempert wird.

9. Verfahren nach Anspruch 8, wobei das Walzerzeugnis während des Schrittes des Verformens der verschweißten Zone auf eine Temperatur im Bereich von 50 bis 95 °C getempert wird.

10. Vorrichtung für die Herstellung biegsamer rohrförmiger Körper aus Kunststoff, die einen Schweißstab, Heizmittel, die dazu ausgelegt sind, die Enden eines um den Schweißstab angepassten Walzerzeugnisses zu erwärmen, und Mittel für die Beaufschlagung der Enden mit Druck enthält, **dadurch gekennzeichnet, dass** sie Mittel zum Verformen enthält, um die Oberfläche der Schweißzone des Walzerzeugnlsses zu erhöhen.

11. Vorrichtung nach Anspruch 10, wobei die Verformungsmittel dazu ausgelegt sind, die Schweißzone in einer Richtung parallel zur Achse des Schweißstabs zu verformen.

12. Vorrichtung nach Anspruch 10, wobei die Verformungsmittel dazu ausgelegt sind, die Schweißzone in einer Richtung senkrecht zur Achse des Schweißstabs zu verformen.
